# EUROPEAN PATENT APPLICATION

(11) **EP 4 418 384 A1**
(43) Date of publication of application: **21.08.2024**
(21) Application number: 23217463.1
(22) Date of filing: 18.12.2023
(51) Int. Cl.: H01M 10/04, H01M 10/0587

(54) **REFORMING DEVICE OF ELECTROCHEMICAL CELLS**

(30) Priority: 15.02.2023 IT 202300002562; 15.02.2023 IT 202300002568; 15.02.2023 IT 202300002550
(71) Applicant: G.D S.p.A., 40133 Bologna (BO) (IT)
(72) Inventor: VILLA, Stefano, I-40133 Bologna (BO) (IT); FORTINI, Massimo, I-40133 Bologna (BO) (IT); NICOLÒ, Davide, I-40133 Bologna (BO) (IT)
(74) Representative: Porta & Consulenti Associati S.p.A.

(57) **Abstract**

Reforming device (80) of electrochemical cells (30) comprising:
- N reforming needles (81) each having a respective longitudinal axis (R2), where N is an integer at least equal to 1;
- at least one rotation mechanism (97) configured to rotate the N reforming needles (81) around the respective longitudinal axis (R2);
- N heating elements (83) respectively housed inside the N reforming needles (81) and integral in rotation to the respective N reforming needles (81).

## Description

The present invention relates to a reforming device of electrochemical cells.

In particular, the present invention relates to electrochemical cells for the production of secondary-type electric batteries, also called rechargeable batteries, which may be charged and discharged several times.

Such rechargeable batteries are commonly used for portable electronics, electric vehicles, industrial, military and aerospace applications.

Examples of such batteries are lithium-ion rechargeable batteries, nickelcadmium rechargeable batteries and nickel-metal hydride rechargeable batteries.

In some types of applications, electric batteries comprise a hollow container with an inner cavity within which an electrochemical cell, consisting of two electrodes (an anode and a cathode) and a separator placed between the two electrodes, is inserted. One electrode is electrically connected to a base bottom of the container and the other electrode is electrically connected to a top plate of the container.

In such applications, the electrochemical cell inserted into the hollow container may be an electrochemical cell of the jelly roll or Swiss roll type wherein the separator and electrodes are wound in a spiral to form a cylindrical electrochemical cell that is inserted into the container cavity. An electrode of the cell thus formed is placed in electrical contact with an electric pole placed on the bottom of the hollow container. The other electrode is placed in electrical contact with a cap, which is placed over the container and creates an additional electrical pole.

The Applicant noted that in the process of forming a jelly roll, as a result of the aforementioned spiral winding of the separator and electrodes, a portion of separator having a typically S-shaped cross-section is created within a through-hole in the jelly roll. This portion of separator within the through-hole may hinder subsequent welding operations aimed at welding the electrode to the bottom of the container. In fact, in the Applicant's experience, the welding of the electrode on the container bottom is carried out by inserting a welding device into the through-hole of the jelly roll.

As, for example, disclosed in KR101726381, it is known in the art to perform a reforming operation adapted to reposition a portion of the separator, which is created within a through-hole of a jelly roll as a result of the jelly roll forming process, against the inner walls of the through-hole; this operation being performed by inserting a previously heated reforming needle into the through-hole.

CN209001039U discloses a reforming device for a cylindrical electrochemical cell wherein the reforming needle is rotated by a motor-driven shaft. The reforming needle is also heated before being inserted into the through-hole of the electrochemical cell by an infrared heating element positioned outside the reforming needle and between the needle drive motor and the cell to be reformed.

The Applicant remarks that the solution disclosed in CN209001039U requires a reforming needle long enough to pass through both the infrared heating element and the through-hole of the electrochemical cell placed downstream of the heating element. This may cause the reforming needle to flex during use. Such behaviour of the needle may adversely affect the efficiency of the reforming process and/or may lead to possible damage to the needle or to the walls of the through-hole of the cell to be reformed.

In this context, the Applicant perceived the need for a reforming device that can effectively perform the reforming operation with a robust structure.

The present invention therefore relates, in a first aspect thereof, to a reforming device of electrochemical cells.

Preferably, the reforming device comprises N reforming needles each having a respective longitudinal axis, where N is an integer at least equal to 1.

Preferably, the reforming device comprises at least one rotation mechanism configured to rotate the N reforming needles around their respective longitudinal axis.

Preferably, the reforming device comprises N heating elements respectively housed inside the N reforming needles and integral in rotation to the respective N reforming needles.

Compared to the solution disclosed in CN209001039U, the invention advantageously allows to use a reforming needle with a limited length, which makes it less prone to bending during use. This allows greater control of the exact position of the reforming needle when inserted into the through-hole of the electrochemical cell. In addition, an inner heating of the needle allows the required optimum temperature to be maintained throughout the reforming process, preventing the needle from cooling or otherwise changing its temperature once inserted into the through-hole of the electrochemical cell.

In addition, the arrangement of the heating element inside the reforming needle allows to heat the reforming needle not only while performing the reforming operation but also before inserting it into the through-hole of the electrochemical cell.

Overall, the above objects of creating a reforming device that is able to effectively perform the reforming operation with a robust structure are achieved.

The present invention may have, in the aspects discussed above, at least one of the preferred features described below. These characteristics may therefore be present individually or in combination with each other, unless expressly stated otherwise.

In a preferred embodiment, the N heating elements are of conductive type, e.g. comprising N electrical resistors.

Preferably, the reforming device comprises at least one controller connected to the N heating elements.

Preferably, the N heating elements are respectively connected to at least one controller by means of N electromechanical devices of the slip ring type.

In a preferred embodiment, the reforming device also comprises N temperature sensors respectively adapted to detect temperature values of the N reforming needles.

Preferably, each of the N temperature sensors is housed in a respective reforming needle and is integral in rotation with said respective reforming needle.

Preferably, the N temperature sensors are respectively connected to at least one controller by said N electromechanical devices of the slip ring type.

Preferably, the N temperature sensors are adapted to send the detected temperature values to the at least one controller.

Preferably, based on the temperature values detected by the N temperature sensors, the at least one controller is adapted to maintain the temperature of the N reforming needles at a predetermined temperature value, controlling the operation of the N heating elements.

Preferably, said at least one rotation mechanism comprises an electric rotation motor.

Preferably, the at least one rotation mechanism is configured to rotate the N reforming needles while (and possibly even before) inserting the N reforming needles into through-holes of the electrochemical cells.

Preferably, said at least one rotation mechanism comprises a plurality of toothed wheels driven by said electric rotation motor.

Preferably, said at least one rotation mechanism comprises a plurality of toothed wheels configured to simultaneously rotate all the N reforming needles.

Preferably, the N reforming needles are all rotated according to a same rotation direction.

In one embodiment, the electrochemical cells are of the jelly roll type.

In one embodiment, the N reforming needles each comprise a body portion and a tip portion.

Preferably, in each reforming needle the body portion is generally cylindrical and the longitudinal axis of the reforming needle is an axis of symmetry of the cylindrical body portion.

Preferably, in each reforming needle the body portion is at least partially hollow.

Preferably, in each reforming needle the body portion and the tip portion are made in a single piece.

The tip portion may or may not be symmetrical with respect to the longitudinal axis of the reforming needle.

In one embodiment, in each reforming needle one free end of the tip portion is eccentric with respect to the longitudinal axis of the reforming needle.

Further features and advantages of the present invention will become clearer from the following detailed description of a preferred embodiment thereof, with reference to the appended drawings and provided by way of indicative and nonlimiting example, in which:
- Figure 1 schematically shows an electrochemical cell with a reforming needle according to an embodiment of the invention;
- Figure 2 shows a reforming needle according to an alternative embodiment of the invention;
- Figure 3 schematically shows a reforming device in a side view according to an embodiment of the invention;
- Figure 4 schematically shows the reforming device of Figure 3 with some parts removed to better highlight others and with some details partially in section;
- Figure 5 schematically shows the reforming device of Figure 3 in a front view and with some parts removed to better highlight others.

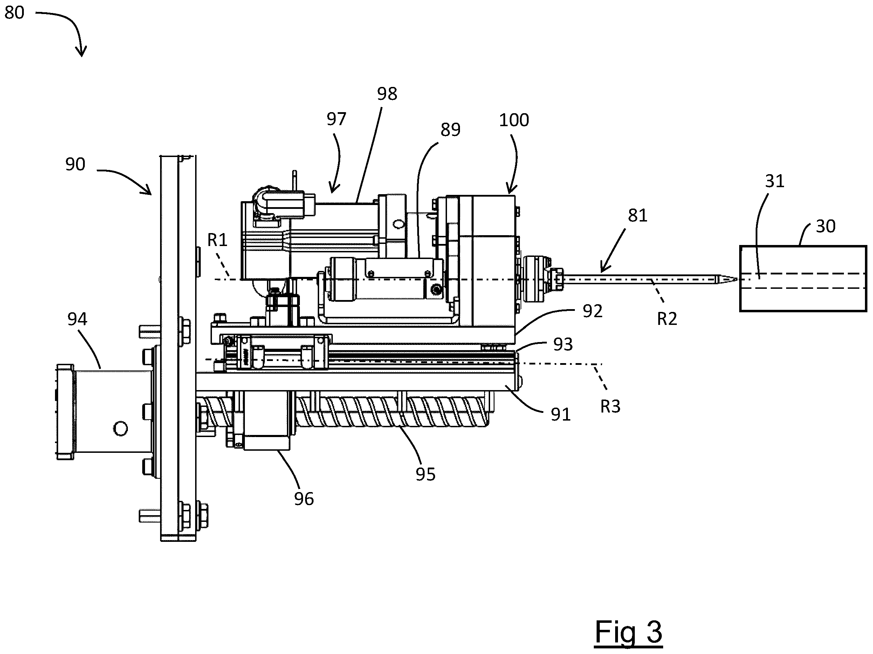

Figure 3 shows a reforming device 80 according to the invention comprising N reforming needles 81, with integer N at least equal to 1 (in the embodiment shown, N=4).

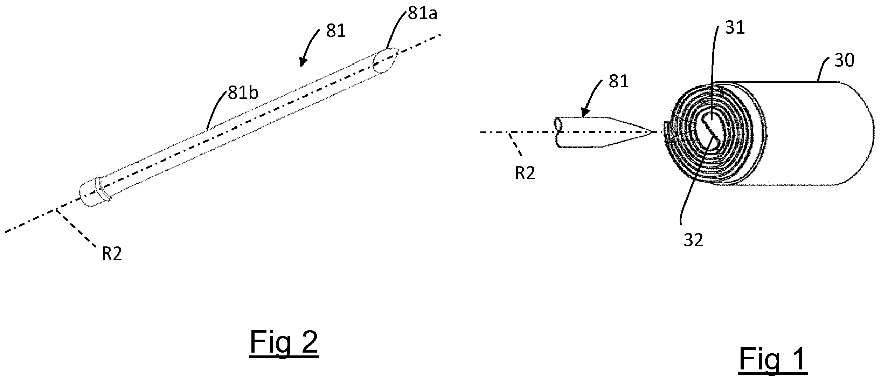

The reforming device 80 is configured to perform a simultaneous reforming operation on N electrochemical cells 30 of the jelly roll type shown in Figure 1 wherein two electrodes and a separator between the two electrodes are wound in a spiral to form a cylinder-shaped electrochemical cell 30.

As noted above, in the process of forming electrochemical cells 30 of the jelly roll type, as a result of the aforementioned spiral winding of the separator and electrodes, a portion of the separator 32 having a typically S-shaped cross-section is created within a through-hole 31 in the jelly roll.

The reforming operation is adapted to reposition the portion of the separator 32 against the inner walls of the through-hole 31.

In a preferred embodiment, the N reforming needles 81 are movable with respect to the N electrochemical cells to be reformed to allow the N reforming needles 81 to be inserted into the holes 31 of the N electrochemical cells 30.

As shown in Figure 2, each of the N reforming needles 81 extends longitudinally along a longitudinal axis R2 and ends with a tip portion 81a.

In particular, each of the N reforming needles comprises a generally cylindrical body portion 81b and the longitudinal axis R2 is an axis of symmetry of the body portion 81b. The tip portion 81a is preferably made in a single piece with the body portion 81b.

In the embodiment shown in Figure 2, the free end of the tip portion 81a is eccentric with respect to the axis R2 so as to avoid interfering with and possibly ruining the separator portion 32 while inserting the needle 81 into the through-hole 31 of the cell 30. However, the invention also applies to the case of a tip portion 81a aligned to the axis R2 as shown in Figure 1.

In order to optimise the reforming operation, the N reforming needles 81 are heated.

In addition, still in order to optimise the reforming operation, the N reforming needles 81 are adapted to be rotated about their own axis R2.

In case of reforming needles 81 set in rotation and when the free end of the tip portion 81a is eccentric with respect to the axis R2, it is preferably provided, before starting the rotation, to partial insert the reforming needle 81 into the through-hole 31 of the cell 30, such insertion being calibrated so as to ensure that the tip 81a is inserted into the through-hole 31 without interfering with the S-shaped separator portion. Thereafter, the reforming needle 81 is rotated and the insertion of the needle 81 into the through-hole 31 is completed.

Preferably, the rotation direction of the reforming needle 81 is opposite to the winding direction of the jelly roll.

For example, the N reforming needles 81 may be rotated at a speed between 50 and 2000 rpm. Preferably, the rotation speed of the N needles 11 is between 500 and 2000 rpm; more preferably between 1000 and 2000 rpm.

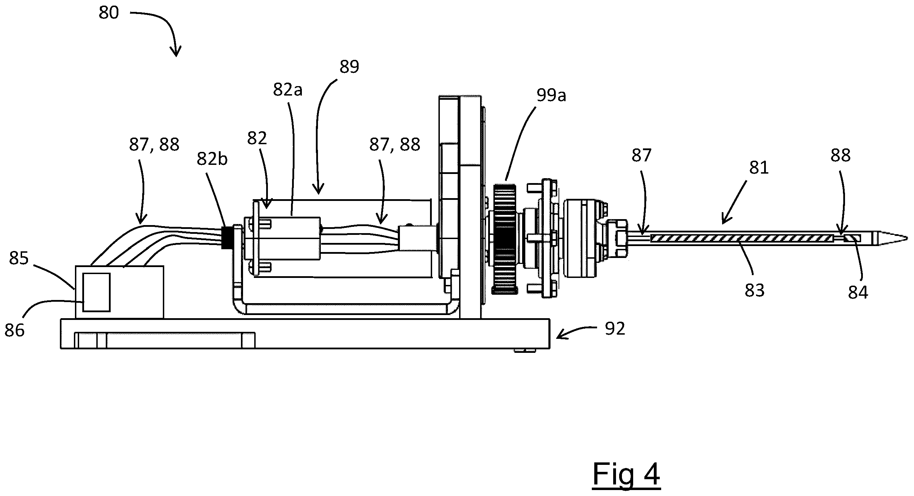

In the embodiment shown in Figures 3-5, the reforming device 80 comprises, for each reforming needle 81, an electromechanical device of the slip ring type 82 and at least one heating element 83 schematically shown in Figure 4.

For example, the heating element 83 comprises an electrical resistor.

In this embodiment, the heating element 83 is placed inside the reforming needle 81. The heating element 83 is placed in a cavity of the reforming needle 81 and is integral in rotation with the reforming needle 81.

The presence of the heating element 83 advantageously allows to heat the N reforming needles 81 while performing the reforming operation and preferably also before inserting them into the through-hole 31 of the electrochemical cell 30.

The heating element 83 is arranged inside the reforming needle 81 along most of the length of the body portion 81b.

Compared to an alternative solution (e.g., known from CN209001039U) wherein the reforming needle is heated before being inserted inside the through-hole of the electrochemical cell by a heating element positioned outside the reforming needle and between the needle drive motor and the cell to be reformed, this embodiment of the invention with the inner heating element 83 advantageously allows to produce reforming needles 81 with a limited length, thus, less prone to bending during use. This allows greater control of the exact position of the reforming needle 81 when it is inserted into the through-hole 31 of the electrochemical cell 30. In addition, an inner heating of the needle 81 allows the required optimum temperature to be maintained throughout the reforming process, preventing the needle 81 from cooling or otherwise changing its temperature once inserted into the through-hole 31 of the electrochemical cell 30.

In this regard, a preferred embodiment is shown in Figure 4 wherein a temperature sensor 84 placed inside the reforming needle 81 and configured to continuously detect the temperature of the reforming needle 81 at least during the reforming operation is provided.

The heating element 83 and the temperature sensor 84 are connected by electrical connections 87 and 88 to a controller 85 provided with a power supply source 86. The controller 85 may be in a remote position or close to the reforming needle 81. In addition, the controller 85 may be a single controller or comprise several controllers, e.g. one for each reforming needle 81.

Given that the reforming needle 81 and the heating element 83 (and the temperature sensor 84 when provided) are rotating with respect to the controller 85, the electrical connection between the heating element 83 (and the temperature sensor 84 when provided) and the controller 85 passes through the electromechanical device of the slip ring type 82.

The latter is a device of a type known in the art adapted to continuously transmit electrical power and signals between a static and a rotating part.

As shown in Figure 4, the electromechanical device of the slip ring type 82 is interposed between the reforming needle 81 and the controller 85.

The temperature sensor 84 is adapted to detect the temperature of the heated reforming needle 81 and send the detected values to the controller 85 by the electrical connections 88. Based on the values detected by the temperature sensor 84, the controller 85 is in turn adapted to keep the temperature of the reforming needle 81 at a predetermined temperature value by controlling the operation of the heating element 83 via the electrical connections 87.

For example, the predetermined temperature value may be between 60 and 130 °C.

This may be obtained, for example, with an electrical power supply of between 20 and 200 watts.

The reforming device 80 further comprises a rotating support 89 for each reforming needle 81. Each rotating support 89 rotates about a respective support axis R1 which is coincident with the longitudinal axis R2 of the respective reforming needle 81.

Each rotating support 89 is mounted integral in rotation with the reforming needle 81 and the heating element 83 placed therein (and with the temperature sensor 84 when provided). As shown in Figure 4, the rotating support 89 defines a housing to house therein a rotating part 82a of the electromechanical device of the slip ring type 82. The rotating part 82a of the electromechanical device of the slip ring type 82 is integral in rotation with the rotating support 89.

The reforming device 80 further comprises a support frame 90. The support frame 90 comprises a support structure 91 and a carriage 92 slidably mounted on the support structure 91.

All the N reforming needles 81 are mounted integrally in translation on the carriage 92. All the N rotating supports 89 are mounted integrally in translation on the carriage 92.

The carriage 92 translates with respect to the support structure 91 along rails 93 that run along a sliding direction R3. The sliding direction R3 is parallel to the longitudinal axes R2 of the reforming needles 81. The longitudinal axes R2 of the N reforming needles 81 are parallel to each other.

The N reforming needles 81 are thereby movable with respect to the N electrochemical cells to be reformed allowing the simultaneous insertion and extraction of the N reforming needles 81 into/from the respective holes 31 of the N electrochemical cells 30.

In order to allow the carriage 92 to translate with respect to the support structure 91, the reforming device 80 comprises an electric translation motor 94 which is integral with the support structure 91 and which rotates an endless screw 95 running parallel to the sliding direction R3. The endless screw 95 is coupled with a bushing 96 connected to the carriage 92. When the endless screw 95 is rotated by the electric translation motor 94, the bushing 96 translates along the endless screw 95 and thus brings the carriage 92 into translation along the sliding direction R3.

In the embodiment shown in Figure 4, the controller 85 is shown integral to the carriage 92. However, in other alternative embodiments the controller 85 may be in a position remote the carriage 92.

In any case, a fixed part 82b of the electromechanical device of the slip ring type 82 is integral to the carriage 92.

The N reforming needles 81 are integral in translation to the carriage 92 and rotate about the longitudinal axis R2 with respect to the carriage 92.

In this regard, the reforming device 80 comprises at least one rotation mechanism 97 configured to rotate the N reforming needles 81 about the respective longitudinal axis R2 and the N supports 89 rotating about the respective support axis R1.

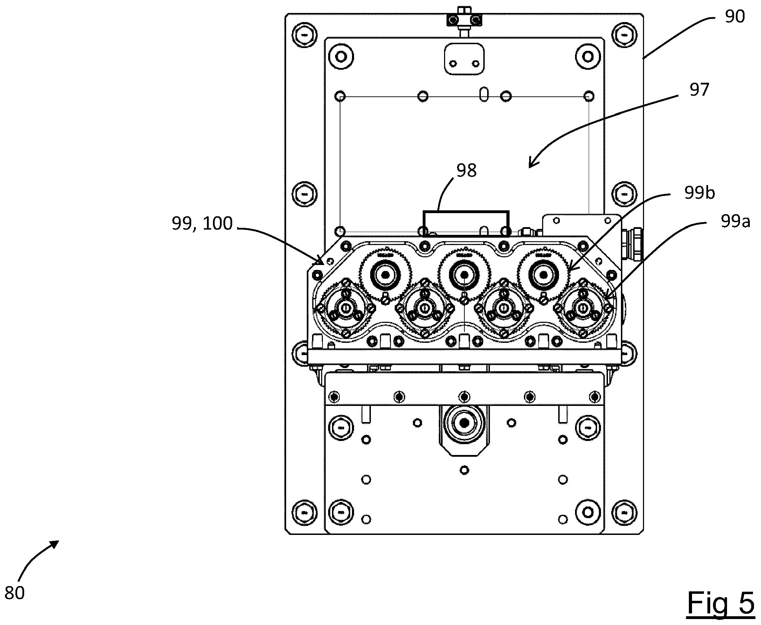

The rotation mechanism 97 comprises an electric rotation motor 98 and a plurality of toothed wheels 99 (better shown in Figure 5).

At least the first toothed wheels 99a of the plurality of toothed wheels 99 are keyed or otherwise coaxial in rotation with the N rotating supports 89 and the N reforming needles 81. A transmission mechanism 100 transmits a rotary motion to the first toothed wheels 99a. This transmission mechanism 100 is connected to the electric rotation motor 98 and is configured to rotate all the first toothed wheels 99a in the same angular direction.

The transmission mechanism 100 is mounted on the carriage 92.

The transmission mechanism 100 comprises second toothed wheels 99b of the plurality of toothed wheels 99. A single second toothed wheel 99b is rotated directly by the electric rotation motor 98 in a second angular direction opposite to the first angular direction. This single second toothed wheel 99b is engaged on two adjacent first toothed wheels 99a and rotates the latter in the first angular direction. Each of the two adjacent first toothed wheels 99a is also geared to a respective second toothed wheel 99b and rotates the latter in the second angular direction. In turn, these second toothed wheels 99b are geared to two further first toothed wheels 99a and rotate the latter in the first angular direction.

This transmission mechanism 100 is particularly directed to rotate four reforming needles 81.

However, this transmission mechanism 100 may be adapted to rotate a different number of reforming needles 81.

## Claims

1. Reforming device (80) of electrochemical cells (30) comprising:
- N reforming needles (81) each having a respective longitudinal axis (R2), where N is an integer at least equal to 1;
- at least one rotation mechanism (97) configured to rotate the N reforming needles (81) around the respective longitudinal axis (R2);
- N heating elements (83) respectively housed inside the N reforming needles (81) and integral in rotation to the respective N reforming needles (81).

2. Reforming device (80) according to claim 1, wherein the N heating elements (83) are of conductive type, for example they comprise N electrical resistors.

3. Reforming device (80) according to claim 1 or 2, comprising at least one controller (85) connected to the N heating elements (83).

4. Reforming device (80) according to claim 3, wherein the N heating elements (83) are respectively connected to the at least one controller (85) by means of N electromechanical devices (82) of the slip ring type.

5. Reforming device (80) according to any one of the preceding claims, further comprising N temperature sensors (84) respectively adapted to detect temperature values of the N reforming needles (81).

6. Reforming device (80) according to claim 5, wherein each of the N temperature sensors (81) is housed in a respective reforming needle (81) and is integral in rotation with said respective reforming needle (81).

7. Reforming device (80) according to claim 4 and according to claim 5 or 6, wherein the N temperature sensors (84) are respectively connected to the at least one controller (85) by means of said N electromechanical devices (82) of the slip ring type.

8. Reforming device (80) according to claim 7, wherein the N temperature sensors (84) are adapted to send the detected temperature values to the at least one controller (85).

9. Reforming device (80) according to claim 8, wherein, based on the temperature values detected by the N temperature sensors (84), the at least one controller (85) is adapted to maintain the temperature of the N reforming needles (81) at a predetermined temperature value, controlling the operation of the N heating elements (83).

10. Reforming device (80) according to any one of the preceding claims, wherein said at least one rotation mechanism (97) comprises an electric rotation motor (98) and a plurality of toothed wheels (99) configured to simultaneously rotate all said N reforming needles (81).

11. Reforming device (80) according to any one of the preceding claims, wherein the electrochemical cells (30) are of the jelly roll type.

12. Reforming device (80) according to any one of the preceding claims, wherein the N reforming needles (81) each comprise a body portion (81b) and a tip portion (81a).

13. Reforming device (80) according to claim 12, wherein in each reforming needle (81) the body portion (81b) is generally cylindrical and the longitudinal axis (R2) is an axis of symmetry of the cylindrical body portion (81b).

14. Reforming device (80) according to claim 12 or 13, wherein in each reforming needle (81) the body portion (81b) is at least partially hollow.

15. Reforming device (80) according to any one of claims 12-14, wherein in each reforming needle (11) the body portion (81b) and the tip portion (81a) are made in a single piece.

16. Reforming device (80) according to any one of claims 12-15, wherein in each reforming needle (81) the tip portion (81a) may or may not be symmetrical with respect to the longitudinal axis (R2).

17. Reforming device (80) according to any one of claims 12-16, wherein in each reforming needle (81) a free end of the tip portion (81a) is eccentric with respect to the longitudinal axis (R2).
